Europäisches Patentamt

European Patent Office

Office européen des brevets

(19)

(11) **EP 0 359 314 B1**

(12) **FASCICULE DE BREVET EUROPEEN**

(45) Date de publication et mention
de la délivrance du brevet:
**05.03.1997 Bulletin 1997/10**

(51) Int Cl.⁶: **G06T 5/00**

(21) Numéro de dépôt: **89202263.3**

(22) Date de dépôt: **07.09.1989**

(54) **Système de traitement d'images**

Bildverarbeitungssystem

Picture-processing system

(84) Etats contractants désignés:
**DE FR GB**

(30) Priorité: **13.09.1988 FR 8811913**

(43) Date de publication de la demande:
**21.03.1990 Bulletin 1990/12**

(73) Titulaires:
• **LABORATOIRES D'ELECTRONIQUE PHILIPS
S.A.S.**
**94450 Limeil-Brévannes (FR)**
Etats contractants désignés:
**FR**
• **Philips Electronics N.V.**
**5621 BA Eindhoven (NL)**
Etats contractants désignés:
**DE GB**

(72) Inventeurs:
• **Billard, Didier Société Civile S.P.I.D.**
**F-75007 Paris (FR)**
• **Poquillon, Bernard Société Civile S.P.I.D.**
**F-75007 Paris (FR)**

(74) Mandataire: **Landousy, Christian et al
Société Civile S.P.I.D.
156, Boulevard Haussmann
75008 Paris (FR)**

(56) Documents cités:
• **PROCEEDINGS OF THE 5TH INTERNATIONAL
CONFERENCE ON PATTERN RECOGNITION,
Miami Beach, Florida, 1-4 décembre 1980, vol. 2,
pages 1251-1254, IEEE, New York, US; A. KORN
et al.: "Motion analysis in natural scenes picked
up by a moving optical sensor"**
• **IEEE TRANSACTIONS ON PATTERN ANALYSIS
AND MACHINE INTELLIGENCE, vol. PAMI-3, no.
1, janvier 1981, pages 12-19, IEEE, New York, US;
M. YACHIDA et al.: "Automatic analysis of
moving images"**

## Description

La présente invention concerne un système de traitement d'images comprenant des moyens d'acquisition de signaux vidéo correspondant à ces images et des moyens de traitement des signaux de sortie desdits moyens d'acquisition, lesdits moyens de traitement incluant eux-mêmes un étage d'estimation du mouvement entre ces images, qui comprend en série un circuit de recalage d'images, un circuit de détermination de différences entre images, un circuit à seuil, et un circuit d'estimation de mouvement, et un étage de mémorisation et/ou de visualisation des signaux représentatifs desdites images.

Pendant plusieurs années, la majorité des procédés et dispositifs de traitement d'images étaient dédiés à l'analyse de scènes statiques, car la plupart des applications envisagées ne prenaient pas en compte les informations temporelles. L'accroissement de la puissance de calcul des matériels informatiques a cependant progressivement permis d'envisager le traitement en temps réel de séquences d'images, notamment dans des applications telles que la vision artificielle, les systèmes de surveillance, la détection de mouvement avec extraction des objets mobiles de la scène, ou encore pour atteindre une meilleure qualité des images par réduction du bruit affectant les séquences d'images.

D'importants efforts ont également été déployés pour résoudre les problèmes inhérents au traitement d'images dynamiques. On ne décrira pas ici les nombreuses expériences psychovisuelles effectuées en matière de perception du mouvement par le système visuel humain. On rappellera simplement qu'il apparaît, à la suite de telles expériences, que ledit système visuel peut distinguer le mouvement relatif de deux régions constituées par des distributions aléatoires de niveaux de gris, à condition que la succession des images soit suffisamment rapide par rapport à l'amplitude du mouvement (voir D.H. Ballard et Ch.M. Brown, "Computer vision", Prentice-Hall Inc., 1982). Cette constatation indique que la détection du mouvement s'effectue au niveau de l'image même et non pas exclusivement par l'intermédiaire d'une représentation symbolique de la scène observée.

La détection de mouvement au niveau d'une image est généralement effectuée selon l'une des trois approches décrites dans T.Z. Young et K.S.Fu, "Handbook of pattern recognition and image processing", Academic Press, 1986. Tout d'abord, on peut chercher à mettre en correspondance des points physiques de la scène et estimer le déplacement de la caméra entre images successives. Cette approche conduit à un système extrêmement complexe d'équations non linéaires à N inconnues, faisant en outre appel à un nombre important d'hypothèses contraignantes. Une autre méthode, plus simple, utilise la notion de flot optique défini par les vitesses instantanées en chaque point X,Y de l'image prise à un instant donné. Dans ce cas, on ne s'intéresse donc qu'à la projection des mouvements tridimensionnels des objets sur un plan particulier, celui de l'image, et cette méthode fait également appel à un certain nombre d'hypothèses restrictives indispensables à l'estimation d'un champ de vitesses, telles que vélocité maximale bornée, cohérence spatiale du champ des vitesses instantanées, etc.... On peut enfin opérer selon une troisième approche prévoyant une détection et une estimation de mouvement par filtrages spatio-temporels.

La détection de mouvement par filtrage spatio-temporel est particulièrement intéressante pour les raisons suivantes. D'une part elle est fondée sur des expériences psychovisuelles qui indiquent que la perception du mouvement par le système visuel humain fait appel à des mécanismes très proches du point de vue formel, et cette similarité avec le comportement des systèmes visuels organiques se manifeste par exemple dans le cas de mouvements apparents induits par des illusions visuelles dynamiques. Par ailleurs, les filtres spatio-temporels classiques permettent d'obtenir une bonne sélectivité en fonction de la direction du mouvement apparent détecté, ainsi qu'en fonction de la vélocité de ce mouvement apparent (dans une moindre mesure cependant, car la sensibilité de l'homme à une variation de vitesse est moindre que sa sensibilité à une variation de direction). Enfin ces filtres permettent la détection de mouvements locaux, c'est-à-dire de mouvements différents en différents points de l'image, à l'opposé des méthodes cherchant une estimation d'un mouvement paramétrique global de la scène observée.

Pratiquement toutes les techniques connues de filtrage spatio-temporel s'accordent pour considérer la séquence d'images à traiter comme un signal tridimensionnel $f(x,y,t)$. Le filtre spatio-temporel, défini dans cet espace tridimensionnel $x,y,t$ pour faire correspondre à $f(x,y,t)$ un signal filtré égal à $T(f(x,y,t))$, doit, pour respecter la règle du caractère local, être entièrement défini sur un support spatio-temporel borné de cet espace tridimensionnel. A priori, cet espace s'apparenterait à un espace tridimensionnel classique dans lequel les objets sont définis en hauteur, largeur et profondeur, mais, dans le cas présent, la dimension temporelle prend une signification particulière du fait de ses caractéristiques propres et notamment de son irréversibilité. Les filtres spatio-temporels connus ont donc souvent un comportement voisin en x et en y, associé à un comportement spécifique suivant la dimension temporelle.

Le filtrage spatio-temporel le plus simple consiste (voir par exemple A.P. Bernat et al., "Security applications of computer motion detection", SPIE Vol.786, Applications of Artificial intelligence V, 1987, p.512-517) à effectuer une différence point à point entre deux images successives : si deux points correspondants n'ont pas la même luminance, cette différence n'est pas nulle et indique un mouvement apparent. Cette technique, sensible au bruit, peut être améliorée en effectuant un filtrage médian ou une moyenne spatiale des niveaux de gris avant de calculer la différence entre images successives. Les filtres réalisés selon cette technique vérifient bien la condition de caractère local, mais aucune sélectivité n'est obtenue suivant la direction du mouvement ou sa vélocité, et leurs performances, assez médiocres, ne peuvent être améliorées qu'à l'aide de techniques qui ne sont plus du domaine du filtrage spatio-temporel proprement dit.

Une technique de filtrage spatio-temporel améliorée consiste à faire appel aux propriétés connues des filtres linéaires et à leurs transformées de Fourier. On peut alors, au prix de traitements particuliers tels que l'estimation de l'énergie spatio-temporelle du mouvement, mesurée par la somme des carrés de deux réponses de filtres linéaires en quadrature de phase, ou cette même estimation pour l'énergie en opposition de phase en remplaçant la somme quadratique par une différence sur les réponses de deux filtres en quadrature de phase, obtenir des filtres sensibles à la direction du mouvement et/ou au sens du déplacement. L'utilisation de batteries de filtres conduit finalement à une possibilité d'estimation à la fois de la direction et de la vélocité du déplacement local.

La communication de S. Beucher, J.M. Blosseville et F. Lenoir, effectuée en novembre 1987 à l'occasion du SPIE Cambridge Symposium on Advances in Intelligent Robotics Systems et ayant pour titre "Traffic spatial measurements using video image processing : application of mathematic morphology to vehicles detection", fait appel à un autre type de filtrage, le filtrage morphologique, en vue de mesurer automatiquement le flot des véhicules. Ce filtrage morphologique ne concerne cependant qu'une image bidimensionnelle reconstruite à partir d'une moyenne de différences entre images successives de la séquence d'images du trafic. Il y a donc, là encore, comme dans les précédents filtres présentés, un comportement d'un certain type dans le plan spatial de l'image et un comportement spécifique suivant la direction temporelle.

Un but de l'invention est de proposer un dispositif de traitement de séquence d'images prévoyant, de façon nouvelle, un filtrage spatio-temporel de comportement similaire suivant chacune des directions spatiales et temporelle.

A cet effet l'invention concerne un système de traitement d'images tel que défini dans le préambule de la description et qui est en outre caractérisé en ce que l'étage d'estimation de mouvement est suivi d'un étage de filtrage morphologique, comprenant lui-même un circuit de définition d'un élément structurant spatio-temporel à partir des paramètres de mouvement estimés par l'étage d'estimation de mouvement et un circuit de filtrage morphologique, ledit filtrage comprenant une ouverture, une fermeture, ou une combinaison en série de ces deux opérations.

De nombreux documents traitent de l'analyse d'images animées. On citera par exemple la communication "Motion analysis in natural scenes picked up by a moving optical sensor" de A.Korn et R.Kories, 5ème Conférence Internationale sur la Reconnaissance d'Objets, Miami Beach, Floride, 1-4 décembre 1980, pp.1251-1254, ou bien l'article "Automatic analysis of moving images", de M. Yachida et al., IEEE Trans. PAMI-3, n°1, janvier 1981, pp.12-20, qui ont l'un et l'autre pour objectif de détecter et de suivre les objets mobiles de ces images. Pour cette estimation de mouvement et le suivi graphique d'objets qui en résulte, il n'est cependant jamais fait appel à des filtrages autres que spatiaux, ni, en particulier, à un filtrage morphologique tridimensionnel incluant la dimension temporelle et exploitant directement, dans cette troisième direction, les résultats d'une estimation de mouvement entre images.

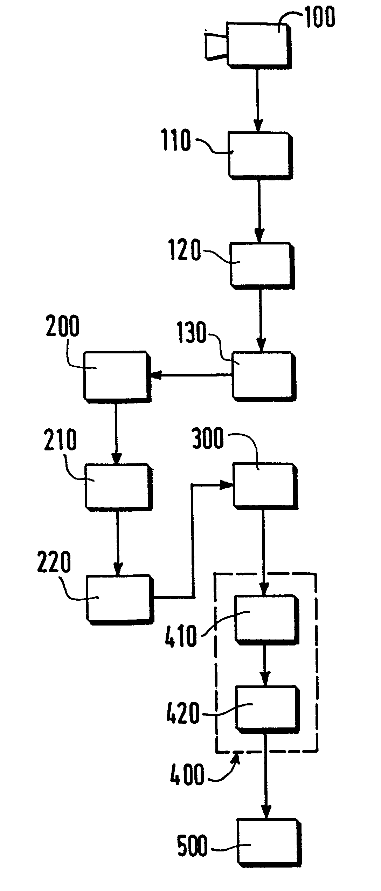

Les particularités et avantages de l'invention apparaîtront de façon plus précise dans la description qui suit et dans la figure 1 annexée, donnée à titre d'exemple non limitatif qui montre un exemple de réalisation d'un système de traitement d'images selon l'invention.

Un système de traitement d'images comprend en général des moyens d'acquisition d'images tels qu'une caméra, puis, éventuellement, des moyens de correction des défauts spécifiques à ces moyens d'acquisition. Il est en effet nécessaire, le plus souvent, de réduire le bruit électronique issu de la partie acquisition des images (plus précisément, le bruit issu des détecteurs, des circuits d'amplification, et des circuits de numérisation puisque les signaux analogiques de sortie de la caméra sont en général envoyés vers un convertisseur analogique-numérique pour être traités sous forme numérique), et de réduire également les défauts propres à la caméra (distorsions, différences de réponse de détecteurs, etc...).

Ces moyens de correction des défauts de la caméra ou des circuits qui lui sont immédiatement associés sont désormais classiques et ne seront pas décrits de façon détaillée. On signale simplement qu'ils permettent une amélioration des performances de détection et de la qualité des images obtenues par rapport aux images d'origine, et que de telles améliorations contribuent à accroître les performances des traitements ultérieurs.

La figure 1 montre un exemple de réalisation d'un système de traitement d'images comprenant successivement une caméra 100, un convertisseur analogique-numérique 110, et un étage de correction de défauts 120 assurant comme indiqué ci-dessus la réduction du bruit et des défauts propres à la caméra et à ses circuits électroniques associés. On supposera, dans l'exemple ici décrit, que la séquence d'images en sortie de l'étage 120 est une séquence de 25 images entrelacées par seconde, de format 512 points x 512 points, ce qui sera dans la suite de la description et sur la figure 1, noté de la façon suivante : 50 Hz, 2:1, 512 x 512, les points de l'image étant en outre codés à l'aide de $2^8 = 256$ niveaux de gris.

Cette séquence d'images 50 Hz, 2:1, 512 x 512 est d'abord fournie à un circuit 130 de conversion de format entrelacé en format séquentiel, puis à un étage d'estimation de mouvement (200, 210, 220, 300), comprenant lui-même tout d'abord un circuit de recalage d'images 200, qui reçoit la suite d'images séquentielles de sortie du circuit 130 et qui est destiné à compenser le mouvement du fond sur la séquence afin d'obtenir en sortie de cet étage une séquence d'images avec un fond fixe. Un exemple de technique de recalage consiste à effectuer une estimation des paramètres du mouvement global entre images successives par mise en correspondance de fenêtres d'une image sur la suivante, puis le calcul de la transformation géométrique globale par estimateur des moindres carrés sur les vecteurs de déplacement ainsi extraits (voir le document "Detection of moving vehicles in thermal imagery obtained from a moving platform", Arthur V. Forman et al., SPIE, vol.432, Applications of Digital Image Processing VI, p.136-147). Ce circuit est suivi d'un circuit 210 de détermination de différences entre images, qui délivre une séquence d'images sur lesquelles apparaissent uniquement les parties mobiles par rapport au fond de la scène (les parties fixes étant éliminées et mises au niveau zéro), avec en plus le bruit issu des étages d'acquisition et de traitement précédents. Un circuit à seuil 220 permet alors d'opérer une sélection sur ces signaux, en fournissant finalement une séquence d'images binaires sur lesquelles les points d'image appartenant à la séquence des différences d'images successives sont mis à 1 si leur valeur de gris sur ces images est différente de zéro (ces points d'image correspondant ainsi aux parties mobiles de la séquence mais aussi au bruit résiduel).

La sortie du circuit à seuil 220 est enfin fournie à un circuit d'estimation de mouvement 300, qui est utilisé pour fournir les paramètres des différentes translations $t_x$, $t_y$ entre deux images successives des objets mobiles de la séquence binaire précédente, ce qui peut être effectué par exemple en appliquant la technique du plan de corrélation de phase, décrite dans le document "The Phase Correlation Image Alignement Method", C.D. Kuglin & D.C. Hines, IEEE Int. Conf. on Cybernetics and Society, San-Francisco, CA 1975, September 23-25). Ce circuit 300 permet de déterminer le mouvement du fond de l'image. L' estimation de mouvement peut être effectuée par exemple en estimant d'abord la rotation globale de l'image, par extraction des contours et détection du pic de corrélation entre histogrammes des directions de ces contours (voir le document suivant : Thèse Universitaire de Compiègne, Eva Salmeron, "Mise en coïncidence automatique des contours extraits d'images aériennes et d'éléments cartographiques", 1986), puis en calculant la translation globale par application de la méthode du plan de corrélation de phase après compensation de la rotation estimée.

Le circuit 300 de l'étage d'estimation de mouvement est suivi d'un étage de filtrage morphologique 400, qui comprend un circuit 410 de définition d'un élément structurant spatio-temporel, en fonction des paramètres du mouvement estimés par ce circuit 300, et un circuit de filtrage morphologique 420.

On rappellera ici quelques notions en matière de morphologie mathématique. L'approche morphologique consiste à considérer une image comme un ensemble sur lequel on va faire intervenir des opérateurs. Pour cela, on définit ce qu'on appelle des éléments structurants, qui sont des formes géométriques données, repérées par la position de leur centre. En faisant coïncider ce centre avec les points d'un ensemble, on peut définir des opérateurs particuliers (érosion, dilatation, etc...), comme indiqué ci-dessous, l'espace considéré, dans le cas présent d'application à des images étant le graphe de la fonction "niveau de gris" de ces images. Le langage de la morphologie mathématique est donc celui de la théorie des ensembles. Dans ce sens, un filtrage morphologique est une transformation non-linéaire d'un signal, qui modifie localement les caractéristiques géométriques de ce signal. Dans le cas d'une image bidimensionnelle binaire, le signal est équivalent à la donnée de l'ensemble des points de niveau 1 (= objets) et de celui des points de niveau 0 (= fond). Effectuer un filtrage morphologique sur cette image consiste à analyser l'interaction entre l'ensemble S des objets avec un ensemble compact B donné, a priori, et qui est l'élément structurant. C'est cet élément qui définit le filtrage à effectuer, par l'intermédiaire des opérations de Minkowski sur les ensembles.

On peut rappeler ici que l'addition et la soustraction de Minkowski de deux ensembles A et B sont définies par les relations (1) et (2) données en annexe. En définissant le symétrique de B noté B' par la relation (3), on peut proposer deux filtres morphologiques duaux, l'érosion de X par B (relation (4)), et la dilatation de X par B (relation (5)). On notera que l'érodé de X par B coïncide avec l'ensemble des points z de l'image pour lesquels l'élément structurant centré en z et noté $B_z$ est entièrement inclus dans X. De même, le dilaté de X par B correspond aux points z de l'image pour lesquels $B_z$ intersecte l'ensemble X. Les deux transformations de base, érosion et dilatation par B ne sont pas inverses l'une de l'autre et leur succession définit deux nouveaux filtres qui sont l'ouverture de X par B, définie par la relation (6), et la fermeture de X par B, définie par la relation (7).

Comme on l'a vu plus haut, les filtres morphologiques ont surtout été appliqués à l'analyse d'images bidimensionnelles statiques, et non pas à des signaux spatio-temporels. Dans la présente application, l'élément structurant constitue ici en fait le support borné B du domaine spatio-temporel sur lequel sont définis les filtrages à effectuer (c'est-à-dire que B est défini comme l'ensemble des points $(x_0, y_0, t_0)$ du domaine spatio-temporel sur lesquels seront effectués les filtrages élémentaires tels qu'érosions et dilatations). La section spatiale Bs $(x_0, y_0) = B(x_0, y_0, 0)$ passant par l'origine de l'espace (x,y,t) étant fixée arbitrairement (par exemple comme un disque de rayon R donné), les autres sections s'en déduisent par les formules (8) et (9) données en annexe et où q, tx, ty sont les paramètres, estimés par le circuit 300, du mouvement entre l'instant t et l'instant $t+t_0$. L'extension temporelle $[t_1,t_2]$ de cet élément structurant $B(x_0, y_0, t_0)$ est fixée arbitrairement en fonction du degré de lissage choisi, mais de toute façon le support doit être borné aussi bien dans l'espace que dans le temps.

Une fois l'élément structurant B défini, un circuit 420 effectue les filtrages morphologiques correspondants. Dans le but de réduire le bruit par filtrage temporel en tenant compte du mouvement relatif entre deux images, on effectuera une ouverture, ou une fermeture, ou bien encore une succession de ces deux opérations pour obtenir une ouverture-fermeture (c'est-à-dire une ouverture suivie d'une fermeture) ou une fermeture-ouverture (c'est-à-dire une fermeture suivie d'une ouverture).

Chacune de ces deux transformations d'ouverture et de fermeture se décompose en une succession des deux opérations spatio-temporelles élémentaires, l'érosion et la dilatation. L'érosion spatio-temporelle ici concernée est définie par l'expression (10), et la dilatation spatio-temporelle par l'expression (11), ces expressions étant, comme précédemment, données en annexe. Dans ces expressions, f(x,y,t) est la valeur de gris de l'image au point (x,y) et à l'instant t. L'ouverture est alors obtenue en effectuant une érosion suivie d'une dilatation et la fermeture par la succession d'une dilatation et d'une érosion (il faut noter que l'extraction du minimum ou du maximum des valeurs de gris de la séquence d'images sur l'élément structurant $B(x_0, y_0, t_0)$ peut se décomposer en une succession de trois extractions successives de minimum ou de maximum suivant chacune des dimensions x, y ou t, dans n'importe quel ordre).

L'étage 400 est, enfin, suivi d'un étage 500 qui permet la mémorisation et/ou visualisation des images filtrées.

La réalisation ainsi décrite du système selon l'invmention conduit à une amélioration de la qualité des images obtenues, grâce à une bonne détection des principaux objets mobiles par rapport au fond et apparaissant sur ces images.

Bien entendu, la présente invention n'est pas limitée à cet exemple de réalisation, à partir duquel des variantes peuvent être proposées sans pour cela sortir du cadre de l'invention. En particulier, on omettra le circuit 130 de conversion de format lorsque la suite d'images à fournir à l'étage d'estimation de mouvement (200, 210, 220, 300) est déjà sous forme séquentielle.

## Annexe

(1) $A + B = (a+b/a_j \, A \, et \, b_j \, B)$

(2) $A - B = (a-b/a_j \, A \, et \, b_j \, B)$

(3) $B' = (-b/ \, b_j \, B)$

(4) Erosion de X par $B = X - B'$

(5) Dilatation de X par $B = X + B'$

(6) Ouverture de X par $B = (X)_B$
avec $(X)_B = (X - B') + B$

(7) Fermeture de X par $B = (X)^B$
avec $(X)^B = (X + B') - B$

(8) $B(x_0, y_0, t_0) = B(f_x(x_0, y_0), f_y(x_0, y_0), t_0)$

(9)

$$\begin{vmatrix} f_x(x_0,y_0) \\ f_y(x_0,y_0) \end{vmatrix} = \begin{vmatrix} \cos^q & -\sin^q \\ \sin^q & \cos(^q) \end{vmatrix} \cdot \begin{vmatrix} x_0 \\ y_0 \end{vmatrix} + \begin{vmatrix} t_x \\ t_y \end{vmatrix}$$

(10) $(f - B)(x, y, t) = Min \, (f(x+x_0, y+y_0, t+t_0))$
(pour $x_0, y_0, t_0$ appartenant à B)

(11) $(f + B)(x, y, t) = Max \, (f(x+x_0, y+y_0, t+t_0))$
(pour $x_0, y_0, t_0$ appartenant à B)

## Revendications

1. Système de traitement d'images comprenant des moyens d'acquisition de signaux vidéo correspondant à ces images et des moyens de traitement des signaux de sortie desdits moyens d'acquisition, lesdits moyens de trai-

**EP 0 359 314 B1**

tement incluant eux-mêmes un étage d'estimation du mouvement entre ces images, qui comprend en série un circuit (200) de recalage d'images, un circuit (210) de détermination de différences entre images, un circuit à seuil (220), et un circuit d'estimation de mouvement (300), et un étage de mémorisation et/ou de visualisation des signaux représentatifs desdites images, caractérisé en ce que l'étage d'estimation de mouvement est suivi d'un étage de filtrage morphologique (400), comprenant lui-même un circuit (410) de définition d'un élément structurant spatio-temporel à partir des paramètres de mouvement estimés par l'étage d'estimation de mouvement et un circuit de filtrage morphologique (420), ledit filtrage comprenant une ouverture, une fermeture, ou une combinaison en série de ces deux opérations.

**Patentansprüche**

1. Bildverarbeitungssystem mit Erfassungsmitteln für diesen Bildern entsprechende Videosignale und mit Verarbeitungsmitteln für Verarbeitung der Ausgangssignale der genannten Erfassungsmittel, wobei die genannten Verarbeitungsmittel selbst eine Stufe zur Abschätzung der Bewegung zwischen Bildern umfassen, die in Reihe eine Bildverschiebeschaltung (200), eine Schaltung (210) zur Bestimmung von Unterschieden zwischen Bildern, eine Schwellenschaltung (220) und eine Schaltung zur Abschätzung von Bewegung (300) umfaßt, und eine Stufe für Speicherung und/oder Visualisierung der die Bilder repräsentierenden Signale umfaßt, <u>dadurch gekennzeichnet</u>, daß auf die Bewegungsbestimmungsstufe eine Stufe zur morphologischen Filterung (400) folgt, die ihrerseits eine Schaltung (410) zur Definition eines strukturierenden räumlich-zeitlichen Elements aufgrund der Parameter von durch die Bewegungsbestimmungsstufe bestimmten Bewegungen sowie eine Schaltung zur morphologischen Filterung (420) umfaßt, wobei die Filterung eine Öffnung, eine Schließung oder eine serielle Kombination dieser beiden Operationen umfaßt.

**Claims**

1. An image processing system, comprising means for the acquisition of video signals corresponding to the images in question, and means for processing the output signals of said acquisition means, said processing means themselves including a stage for estimating the movement between said images which includes a series connection of an image retiming circuit (200), a circuit (210) for determining differences between images, a threshold circuit (220), and a movement estimation circuit (300), and a stage for the storage and/or visualization of the signals representative of said images, characterized in that the movement estimation stage is succeeded by a morphological filtering stage (400) which itself includes a circuit (410) for defining a space-time structuring element from movement parameters estimated by the movement estimation stage, and a morphological filtering circuit (420), said filtering comprising an opening, a closing or a series combination of these two operations.